# EUROPEAN PATENT SPECIFICATION

(11) **EP 0 490 431 B1**
(45) Date of publication and mention of the grant of the patent: **11.09.1996**
(21) Application number: 91203167.1
(22) Date of filing: 04.12.1991
(51) Int. Cl.: G05B 19/41, G05B 19/4103

(54) **Machining apparatus**
Bearbeitungsmaschine
Machine d'usinage

(30) Priority: 10.12.1990 NL 9002703
(43) Date of publication of application: 17.06.1992
(73) Proprietor: GRUNDIG Aktiengesellschaft, D-90762 Fürth (DE)
(72) Inventor: Ripoll Ensenat, Noel, NL-5656 AA Eindhoven (NL); Sorlie, James Arnold, NL-5656 AA Eindhoven (NL)
(74) Representative: Dreykorn-Lindner, Werner, Dipl.-Ing.

(56) References cited:
- EP-A- 417 337
- EP-A- 0 285 660
- EP-A- 0 319 587
- EP-A- 0 384 925
- WO-A-89/03074
- WO-A-90/04818
- DE-A- 3 643 713
- DE-A- 3 831 900
- ZWF ZEITSCHRIFT FÜR WIRTSCHAFTLICHE FERTIGUNG, vol. 85, no. 8, August 1990, München, DE, pp. 421-426; POTTHAST u.a.: 'Spline-Interpolation für fünfachsige Fräsbearbeitung'
- SIEMENS ENERGY & AUTOMATION, no. EMO, 1989, Berlin, DE, pp. 19-20; VOLKER REETZ: 'Universal Spline concept'
- WERKSTATTSTECHNIK, ZEITSCHRIFT FÜR INDUSTRIELLE FERTIGUNG, vol. 76, no. 5, 1986, Berlin, DE, pp. 309-312; J. HUAN: 'Spline-interpolation in der Steuerung einer Werkzeugmaschine'
- ZWF ZEITSCHRIFT FÜR WIRTSCHAFTLICHE FERTIGUNG, vol. 84, no. 3, March 1989, München, DE, pp. 114-117; DISTLER: 'Spline-Programmierung als Lösung für komplexe Bearbeitungsaufgaben'

## Description

The invention relates to a machining apparatus comprising a control device for controlling a tool, by means of which a part is to be machined on the basis of a predetermined geometry, which control device comprises a spline interpolation device with path-determining means for determining a path of the tool on the basis of parametrized splines.

Such a machining apparatus is known from the article "Durchgängiges Spline-Konzept", V. Reetz, Energie und Automation 11 (1989), Special "EMO" 1989, pp. 19-20. This article discloses how use is made for machining complicated parts of spline interpolation in order to be able to describe, in contrast with linear and circular interpolation methods, a part geometry with a minimum number of supporting points. Splines, i.e. polynomials of higher degree, of the third order are used to describe path segments, it being ensured that separate path segments adjoin each other as closely as possible, that is to say that it is ensured that the contour or path to be machined is as smooth as possible. Further, the splines, which are parametrized in terms of arc length, are parametrized so that the spatial speed of the tool to be controlled is substantially constant along the contour to be machined. A spline is then characterized by multi-axis end point coordinates of a path segment, the value of the path parameter at the beginning point of a polynomial (the path length) and the coefficients of the third degree axis polynomials. For the calculation of a polynomial, there can be started from a part contour determined by means of a CAD program or a contour can be obtained by digitization or scanning. Adaptation of a spline to a contour is effected on the basis of approximation methods, such as a Newton approximation method. Due to the splines determined in the manner described above, a substantially linear relation will exist between the path covered by the tool and the parameter value, which is expressed in terms of arc length. In the case of arbitrary splines, such as splines directly originating from a CAD program, such a linear relation will generally not exist, that is to say that the arc length variation, which increases monotone with the increase of the parameter value, will not increase linearly when the parameter value connected with the arc length increases uniformly, as a result of which the average speed over a path segment is constant, it is true, but the instantaneous speed along the spline varies.

Werkstattechnik, Zeitschrift für industrielle Fertigung, vol. 76, no. 5, 1986, Berlin, DE, pages 309- 312, J. Huan, "Spline-Interpolation in der Steuerung einer Werkzeugmaschine" discloses the interpolation of a spline being divided in a rough and a precision interpolation. This interpolation in two steps reduces the spline interpolation to a segmented linear interpolation and the length of one linear part is dependent on the size of the parameter increase, which is dependant on a desired path speed.

The invention has for its object to provide a machining apparatus of the kind mentioned in the opening paragraph, in which the path speed is constant with splines arbitrarily supplied to the machining apparatus.

A machining apparatus according to the invention is characterized in that the spline interpolation device comprises approximation means for determining in a number of steps by approximation an increase of a parameter of an arc length function and further calculation means for determining control signals for the tools whilst supplying the increase of the parameter to the parametrized splines. By a machining apparatus according to the invention, high machining speeds with a very high machining quality can be attained, that is to say that the machining apparatus provides an optimal part with respect to shape and surface quality. Small errors in the approximation may result in small speed errors, it is true, but not in position errors.

The invention is based on the idea that the arc length function can be expressed in terms of an arbitrary parameter. Such a relation then exists between the increase of the arc length and the parameter that upon increase of the arc length the increase of the parameter cannot be resolved therefrom analytically. According to the invention, by approximation an explicit relation is obtained between increase of parameter and increase of arc length and the increase of the parameter is predicted with reference to the desired speed along the spline, the speed being the desired distance per sampling step. By substituting the parameter increase found into the spline description, set points are obtained for the multi-axis position regulation.

A first embodiment of a machining apparatus according to the invention is characterized in that the approximation means approximate the integrant of the arc length function in a present position on the spline with a number of terms of the Taylor series development and determine the increase of the parameter on the basis of the inverse of the approximated arc length function and the desired path speed. If only the first term of the Taylor series development is taken into account, in a simple manner a linear predictor is obtained for the parameter value. When taking into account more terms, it becomes more difficult to make the increase of the parameter explicit.

A second embodiment of a machining apparatus according to the invention, in which it is simpler to determine the increase of the parameter, is characterized in that the approximation means approximate an inverse of a table of arc length function values obtained by calculation on the basis of a priori knowledge with a polynomial and determine the increase of the parameter on the basis of the polynomial and the desired path speed. Utilizing the a priori knowledge that the arc length function in the parameter is increasing in one tone and that the integrant of the arc length function in the form of an integral has a given shape, the inverse of the tabulated arc length function can be approximated by a polynomial.

A third embodiment of a machining apparatus according to the invention is characterized in that the approximation means approximate the parametrized splines in such a manner with rational splines that a substantially linear relation is obtained between the parameter and the arc length function, and determine the increase of the parameter on the basis of the linear relation and the desired path speed. The use of rational splines provides an additional degree of freedom, as a result of which the non-linear arc length function can be transformed into an arc length function which has a linear relation between the arc length and the parameter. Also in the third embodiment, the parameter value can be determined in a simple manner, although the transformation is somewhat cumbersome.

With further refinements of the spline interpolation device according to the invention, an increasing number of spline coefficients can be omitted, as a result of which inter alia shorter control programs are obtained. For example, with a three-axis control, three spline coefficients can be omitted if a smooth speed transition is required at adjoining track segments, that is to say that the first derivation is continuous. The requirement that the path curvature is continuous means that the second derivation at spline transition is continuous, as a result of which again three coefficients can be omitted. With a third degree polynomial, the remaining third degree coefficients are then given by the workpiece program. It should be noted that such continuity requirements cannot always be imposed because in given cases the part itself imposes discontinuity.

The invention will be described more fully with reference to a drawing, in which:
Figure 1A shows diagrammatically a machining apparatus according to the invention,
Figure 1B shows a part of the control of the machining apparatus according to the invention including a spline interpolator,
Figure 2A shows an arc length along a spline as a function of a parameter,
Figure 2B shows for explanation of the spline interpolation according to the invention a spline, and
Figure 3 shows the approximation of an arc length function by means of rational splines.

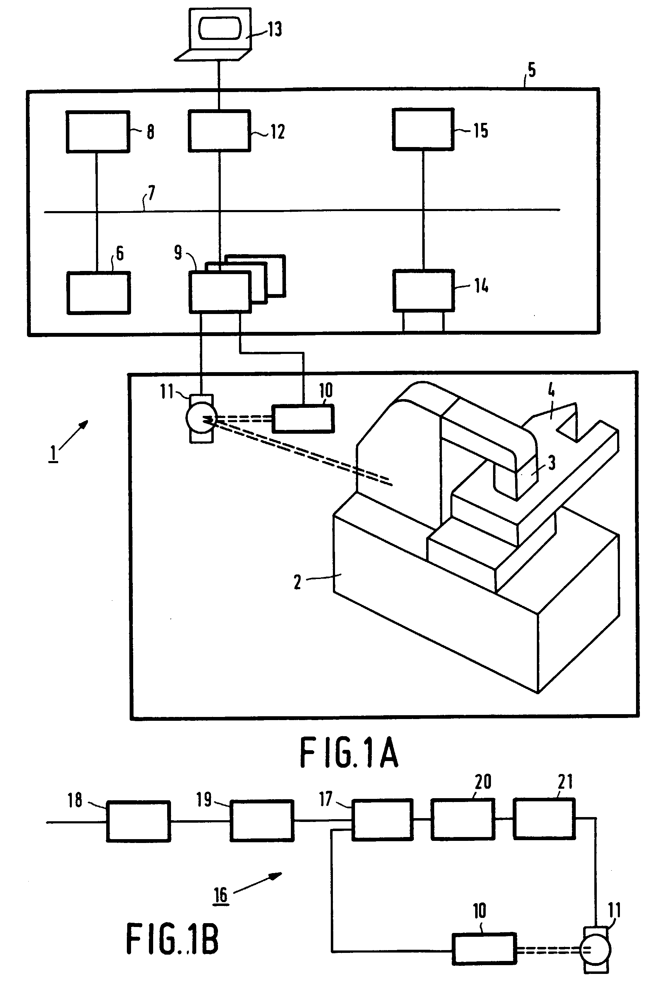

Figure 1A shows diagrammatically a machining apparatus 1 according to the invention comprising a machine tool 2 with a tool 3 for machining a part 4. The machining apparatus 1 further comprises a control device 5 for controlling the tool 3. The control device 5 comprises a central processing unit 6, which is connected to an internal bus 7 for exchanging data with further system components, such as a memory 8, a number of input and output means 9 for supply of input signals of measuring means 10 and output signals to an actuator 11, such as a motor. The measuring means 10 are inter alia designed to measure quantities, such as axis position and axis speed, which are used in an incremental control system for controlling such quantities. Such control algorithms can be stored in the memory in a manner usual for machining apparatuses in the form of programmed means and can be executed by the central processing unit 6. The control device 5 further comprises monitor driving means 12 for driving a monitor with keyboard 13, further input and output means 14 for input and output of further signals occurring in a machining apparatus, such as signals of end-position switches and signals transported via a V24 interface from and to a reading and punching device for reading and punching, respectively, a paper tape with data for a part program. A printer and an external computer system may also be coupled to such a V24 interface and a connection with a CAD system may exist for supplying splines. The control device 5 further comprises a supply unit 15.

Figure 1B shows a part of the control of the machining apparatus 1 according to the invention, which part constitutes a feedback loop 16 for regulating an axis in a multi-axis machining apparatus 1. The feedback loop is distributed over the central processing unit 6 with memory 8, the input and output means 9 and the measuring means 10 and actuator 11, while components corresponding to Figure 1A are indicated in a corresponding manner. The incremental control feedback loop 16 further comprises a comparison member 17 for comparing data from the measuring system 10 with incremental data supplied by a spline interpolation device 18 according to the invention via a digital filter 19 to the comparison member 17. The comparison member 17 in such an incremental control system is in the form of an adder, which supplies an output control value if there is a difference between input values thereof. Further, the regulation loop 16 comprises a digital controller 20, which is coupled at its input end to the comparison member 17 and at its output end to a analog-to-digital converter 21. The spline interpolation device 18, which may be in the form of programmed means, carries out an interpolation on a geometry of a part 4 to be machined supplied to the control device 5 and predetermined. The predetermined geometry can be included in known manner in a so-called part program, which is provided in the memory 8.

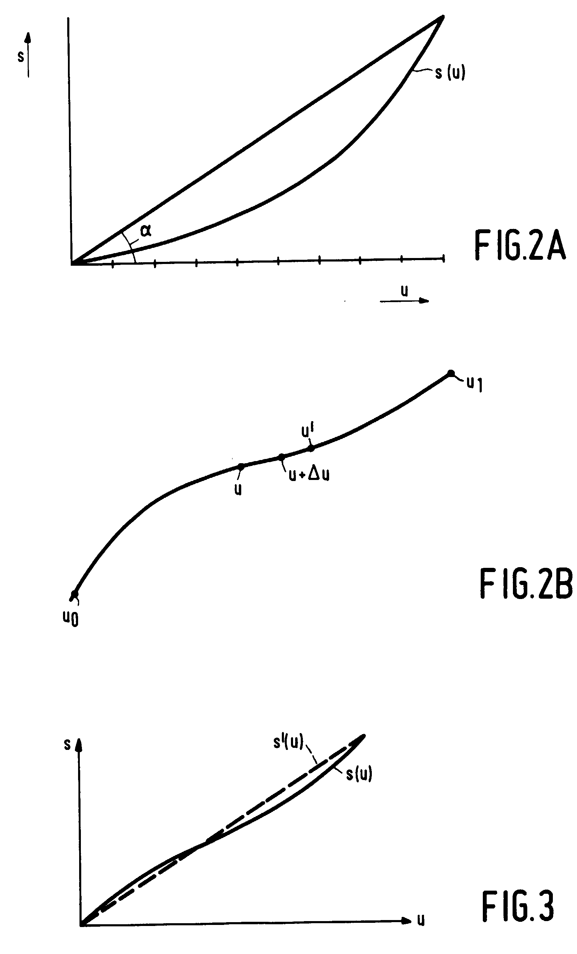

Figure 2A shows an arc length function s(u) along a spline as a function of a parameter u. With a uniform increase of u, too low a path speed will hold for ds/du < tanα and too high a path speed will hold for ds/du > tanα, while over a whole machining sequence the average path speed is equal to the desired path speed. At a desired instantaneous speed along the spline, i.e. a desired increase in distance per sampling step, according to the invention for a desired Δs an associated Δu is determined. On the basis of approximation, an inverse u = u(s) is determined so that u can be explicitly determined when Δs is given.

Figure 2B shows a spline with an arbitrary parameter u along it. For a path segment between u = u₀ and u = u₁, from u = u to u = u+Δu, Δu will have to be estimated so that an interpolated tool path is traversed at a constant speed. The estimation error does not give rise to a position error, but a speed error may occur. According to the invention, an approximation is aimed at to determine an increase of the parameter in such a manner that a desired increase in distance is attained along the tool path. There is started from an integral expressing the relation between the arc length increase Δs and the parameter increase Δu:$\text{Δ} \text{s} \text{= ∫ (} \frac{\text{ds}}{\text{du}} \text{).} \text{du}$ integrated from u = u₀ to u = u₀+Δu, where it holds for Cartesian coordinates that:$\frac{\text{ds}}{\text{du}} \text{=} \sqrt{\text{(} \frac{\text{dx}}{\text{du}} {\text{)}}^{\text{2}} \text{+(} \frac{\text{dy}}{\text{du}} {\text{)}}^{\text{2}} \text{+(} \frac{\text{dz}}{\text{du}} {\text{)}}^{\text{2}}}$ The aforementioned integral, whose integrant assumes with cubic splines the form of a square root of a fourth degree polynomial, cannot be resolved analytically and according to the invention the inverse thereof is searched.

In a first embodiment, As is approximated according to the invention by integration of a number of terms of a Taylor series development of the integrant in a present position on the spline, a finite number of terms being taken. In a simple embodiment, only the first term of the Taylor series development is taken, as a result of which, as can be simply verified, Δu can be expressed explicitly as follows in Δs:$\text{Δ} \text{u} \text{=} \frac{\text{Δ} \text{s}}{\text{(} \frac{\text{ds}}{\text{du}} \text{)}} \text{for u} \text{=} {\text{u}}_{\text{0}}$ This expression represents a linear predictor for Δu and an increase of the spline parameter is determined by determining ds/du for the present position on the spline and dividing Δs, i.e. the feed rate, thereby. With a so-called feed rate overwrite, Δu is scaled correspondingly. With two terms of the Taylor series development, a quadratic predictor is found for Δu. The spline interpolation device 18 further comprises calculation means supplying the parameter increase Δu found to a multi-axis spline description, for example a third degree polynomial description, as a result of which the following set points are obtained for the control loops:${\text{x = a}}_{\text{x}} {\text{.u}}^{\text{3}} {\text{+ b}}_{\text{x}} {\text{.u}}^{\text{2}} {\text{+ c}}_{\text{x}} \text{.u}$${\text{y = a}}_{\text{y}} {\text{.u}}^{\text{3}} {\text{+ b}}_{\text{y}} {\text{.u}}^{\text{2}} {\text{+ c}}_{\text{y}} \text{.u}$${\text{z = a}}_{\text{z}} {\text{.u}}^{\text{3}} {\text{+ b}}_{\text{z}} {\text{.u}}^{\text{2}} {\text{+ c}}_{\text{z}} \text{.u}$ in which the coefficients aₓ, a_{y}, a_{z}, bₓ, b_{y}, b_{z}, cₓ, c_{y} and c_{z} originate from a part program. Zero^{th} degree determs dₓ, d_{y} and d_{z} can be omitted because in practical cases use is made of an incremental control loop. In order that the calculation can be carried out efficiently, the coefficients are adapted after each calculation, as a result of which it seems as if the spline being machined becomes increasingly shorter. It should be noted that other approximations may also be chosen for the integrant if only an explicit expression is found for Δu.

In a second embodiment according to the invention, the function s = s(u) is calculated and tabulated for a number of values of u, and a tabulated inverse u = u(s) is approximated therefrom with a polynomial description whilst utilizing a priori knowledge of the integrant. For each desired Δs, a Δu can be derived from the polynomial description found, that is to say that a constant path speed can be attained.

In a third embodiment, the splines are approximated by rational splines in such a manner that a linear relation is obtained between the approximated arc length function and the parameter. Splines described in the "ordinary" polynomial form are transformed into rational splines:${\text{x = {a}}_{\text{x}} {\text{'.u}}^{\text{3}} {\text{+ b}}_{\text{x}} {\text{'.u}}^{\text{2}} {\text{+ c}}_{\text{x}} {\text{'.u + d}}_{\text{x}} {\text{'}/{e.u}}^{\text{3}} {\text{+ f.u}}^{\text{2}} \text{+ g.u + h}}$${\text{y = {a}}_{\text{y}} {\text{'.u}}^{\text{3}} {\text{+ b}}_{\text{y}} {\text{'.u}}^{\text{2}} {\text{+ c}}_{\text{y}} {\text{'.u + d}}_{\text{x}} {\text{'}/{e.u}}^{\text{3}} {\text{+ f.u}}^{\text{2}} \text{+ g.u + h}}$${\text{z = {a}}_{\text{z}} {\text{'.u}}^{\text{3}} {\text{+ b}}_{\text{z}} {\text{'.u}}^{\text{2}} {\text{+ c}}_{\text{z}} {\text{'.u + d}}_{\text{x}} {\text{'}/{e.u}}^{\text{3}} {\text{+ f.u}}^{\text{2}} \text{+ g.u + h}}$ The desired linear relation can be obtained due to the fact that an additional degree of freedom is attained as a result of the four enumerator coefficients. In this embodiment, it is not necessary to calculate each time Δu on the spline, but only one calculation at the beginning of the spline is required.

In the said embodiments, the spline coefficients may be omitted if the splines of succeeding program blocks are continuous with respect to the first derivation, which has the advantage that the part program may be shorter. If also the curvature of the path is continuous (second derivation continuous), further spline coefficients may be omitted. With an incremental control loop, only the coefficients of highest degree are then given by the part program. This holds for cubic splines. Corresponding considerations hold for splines of higher degree.

## Claims

1. A machining apparatus (1) comprising a control device (5) for controlling a tool (3), by which on the basis of a predetermined geometry a part (4) is to be machined, which control device (5) comprises a spline interpolation device (18) having path-determining means for determining on the basis of parametrized splines a path of the tool, and the spline interpolation device (18) comprises approximation means for determining in a number of steps by approximation an increase of a parameter (Δu) of an arc length function (s(u)) with reference to a desired speed along the spline **characterized in that**
the machining apparatus (1) comprises further calculation means for determining control signals for the tool (3) whilst supplying the increase of the parameter (Δu) to the parametrized splines, and
the approximation means approximate the integrant of the arc length function (s(u)) in a present position on the spline with a number of terms of a Taylor series development and determine the increase of the parameter (Δu) on the basis of the inverse of the approximated arc length function and a desired path speed.

2. A machining apparatus (1) comprising a control device (5) for controlling a tool (3), by which on the basis of a predetermined geometry a part (4) is to be machined, which control device (5) comprises a spline interpolation device (18) having path-determining means for determining on the basis of parametrized splines a path of the tool, and the spline interpolation device (18) comprises approximation means for determining in a number of steps by approximation an increase of a parameter (Δu) of an arc length function (s(u)) with reference to a desired speed along the spline **characterized in that**
the machining apparatus (1) comprises further calculation means for determining control signals for the tool (3) whilst supplying the increase of the parameter (Δu) to the parametrized splines, and
the approximation means approximate an inverse of a table of arc length function values obtained by calculation on the basis of a priori knowledge with a polynomial and determine the increase of the parameter (Δu) on the basis of the polynomial and the desired path speed.

3. A machining apparatus (1) comprising a control device (5) for controlling a tool (3), by which on the basis of a predetermined geometry a part (4) is to be machined, which control device (5) comprises a spline interpolation device (18) having path-determining means for determining on the basis of parametrized splines a path of the tool, and the spline interpolation device (18) comprises approximation means for determining in a number of steps by approximation an increase of a parameter (Δu) of an arc length function (s(u)) with reference to a desired speed along the spline
**characterized in that**
the machining apparatus (1) comprises further calculation means for determining control signals for the tool (3) whilst supplying the increase of the parameter (Δu) to the parametrized splines, and
the approximation means approximate the parametrized splines in such a manner with rational splines that a substantially linear relation is obtained between the parameter and the arc length function and determine the increase of the parameter (Δu) on the basis of the linear relation and the desired path speed.

## Patentansprüche

1. Eine Bearbeitungsmaschine, die eine Steuervorrichtung (5) zur Steuerung eines Werkzeuges (3) umfaßt, durch die ein Teil (4) aufgrund einer festgelegten Geometrie bearbeitet werden soll, wobei die Steuervorrichtung (5) eine Spline-Interpolationsvorrichtung (18) mit einer Wegbestimmungseinrichtung zur Festlegung eines Weges des Werkzeugs auf der Grundlage parametrisierter Splinen umfaßt und die Splinen-lnterpolsationsvorrichtung (18) Näherungseinrichtungen zur Ermittlung einer Vergrößerung eines Parameters (Δu) einer Bogenlängenfunktion (s(u)) unter Bezugnahme auf eine gewünschte Geschwindigkeit entlang der Spline in einer Reihe von Schritten durch Näherung umfaßt, die **dadurch gekennzeichnet ist,**
daß die Bearbeitungsmaschine (1) weitere Recheneinrichtungen für die Bestimmung von Steuersignalen für das Werkzeug (3) umfaßt, während die Vergrößerung des Parameters (Δu) den parametrisierten Splinen zugeführt wird, und
die Näherungseinrichtungen sich dem Integranden der Bogenlängenfunktion (s(u)) in einer aktuellen Position auf der Spline mit einer Reihe von Termen der Taylorschen Reihenentwicklung nähern und die Vergrößerung des Parameters (Δu) aufgrund der Inverse der approximierten Bogenlängenfunktion und einer gewünschten Weggeschwindigkeit bestimmen.

2. Eine Bearbeitungsmaschine, die eine Steuervorrichtung (5) zur Steuerung eines Werkzeuges (3) umfaßt, durch die ein Teil (4) aufgrund einer festgelegten Geometrie bearbeitet werden soll, wobei die Steuervorrichtung (5) eine Spline-lnterpolationsvorrichtung (18) mit einer Wegbestimmungseinrichtung zur Festlegung eines Weges des Werkzeugs auf der Grundlage parametrisierter Splinen umfaßt und die Splinen-lnterpolsationsvorrichtung (18) Näherungseinrichtungen zur Ermittlung einer Vergrößerung eines Parameters (Δu) einer Bogenlängenfunktion (s(u)) unter Bezugnahme auf eine gewünschte Geschwindigkeit entlang der Spline in einer Reihe von Schritten durch Näherung umfaßt, die **dadurch gekennzeichnet ist,**
daß die Bearbeitungsmaschine (1) weitere Recheneinrichtungen für die Bestimmung von Steuersignalen für das Werkzeug (3) umfaßt, während die Vergrößerung des Parameters (Δu) den parametrisierten Splinen zugeführt wird, und
die Näherungseinrichtungen sich einer Inverse einer Tabelle von Bogenlängen-Funktionswerten, die durch Berechnung aufgrund apriorischer Kenntnis erzielt werden, mit einem Polynom nähern und die Vergrößerung des Parameters (Δu) aufgrund des Polynoms und der gewünschten Weggeschwindigkeit bestimmen.

3. Eine Bearbeitungsmaschine, die eine Steuervorrichtung (5) zur Steuerung eines Werkzeuges (3) umfaßt, durch die ein Teil (4) aufgrund einer festgelegten Geometrie bearbeitet werden soll, wobei die Steuervorrichtung (5) eine Spline-Interpolationsvorrichtung (18) mit einer Wegbestimmungseinrichtung zur Festlegung eines Weges des Werkzeugs auf der Grundlage parametrisierter Splinen umfaßt und die Splinen-Interpolsationsvordchtung (18) Näherungseinrichtungen zur Ermittlung einer Vergrößerung eines Parameters (Δu) einer Bogenlängenfunktion (s(u)) unter Bezugnahme auf eine gewünschte Geschwindigkeit entlang der Spline in einer Reihe von Schritten durch Näherung umfaßt, **die dadurch gekennzeichnet ist,**
daß die Bearbeitungsmaschine (1) weitere Recheneinrichtungen für die Bestimmung von Steuersignalen für das Werkzeug (3) umfaßt, während die Vergrößerung des Parameters (Δu) den parametrisierten Splinen zugeführt wird, und
die Näherungseinrichtungen sich den parametrisierten Splinen so mit rationalen Splinen nähern, daß eine wirkliche lineare Relation zwischen dem Parameter und der Bogenlängenfunktion erzielt wird, und die Vergrößerung des Parameters (Δu) auf der Grundlage der linearen Relation und der gewünschten Weggeschwindigkeit bestimmen.

## Revendications

1. Machine d'usinage (1) comprenant un dispositif de commande (5) pour commander un outil (3), à l'aide duquel une pièce (4) doit être usinée sur la base d'une géométrie prédéterminé, lequel dispositif de commande (5) comprend un dispositif d'interpolation (18) de la courbe spline comportant des moyens de détermination de trajectoire pour déterminer une trajectoire de l'outil sur la base de courbes splines paramétrées, et dans laquelle le dispositif (18) d'interpolation de la courbe spline comprend des moyens d'approximation pour déterminer par approximation, en un certain nombre d'étapes, un accroissement d'un paramètre (Δu) d'une fonction de longueur d'arc (s(u)) en référence à une vitesse désirée le long de la courbe spline,
caractérisée en ce que
la machine d'usinage (1) comprend en outre des moyens de calcul pour déterminer des signaux de commande pour l'outil (3), tout en appliquant l'accroissement du paramètre (Δu) aux courbes splines paramétrées, et
les d'approximation établissent une approximation de la partie intégrante de la fonction de longueur d'arc (s(u)) dans une position actuelle sur la courbe spline avec un certain nombre de termes d'un développement en série de Taylor et déterminent l'accroissement du paramètre (Δu) sur la base de l'inverse de la fonction de longueur d'arc approchée et d'une vitesse désirée sur la trajectoire.

2. Machine d'usinage (1) comprenant un dispositif de commande (5) pour commander un outil (3), à l'aide duquel une pièce (4) doit être usinée sur la base d'une géométrie prédéterminé, lequel dispositif de commande (5) comprend un dispositif d'interpolation de la courbe spline comportant des moyens de détermination de trajectoire pour déterminer une trajectoire de l'outil sur la base de courbes splines paramétrées, et dans laquelle le dispositif (18) d'interpolation de la courbe spline comprend des moyens d'approximation pour déterminer par approximation, en un certain nombre d'étapes, un accroissement d'un paramètre (Δu) d'une fonction de longueur d'arc (s(u)) en référence à une vitesse désirée le long de la courbe spline,
caractérisée en ce que
la machine d'usinage (1) comprend en outre des moyens de calcul pour déterminer des signaux de commande pour l'outil (3), tout en appliquant l'accroissement du paramètre (Δu) aux courbes splines paramétrées, et
les moyens d'approximation approximent l'inverse d'une table de valeurs d'une fonction de longueur d'arc obtenues par calcul sur la base d'une connaissance a priori avec un polynôme et déterminent l'accroissement du paramètre (Δu) sur la base du polynôme et de la vitesse désirée sur la trajectoire.

3. Machine d'usinage (1) comprenant un dispositif de commande (5) pour commander un outil (3), à l'aide duquel une pièce (4) doit être usinée sur la base d'une géométrie prédéterminé, lequel dispositif de commande (5) comprend un dispositif d'interpolation de la courbe spline comportant des moyens de détermination de trajectoire pour déterminer une trajectoire de l'outil sur la base de courbes splines paramétrées, et dans laquelle le dispositif (18) d'interpolation de la courbe spline comprend des moyens d'approximation pour déterminer par approximation, en un certain nombre d'étapes, un accroissement d'un paramètre (Δu) d'une fonction de longueur d'arc (s(u)) en référence à une vitesse désirée le long de la courbe spline,
caractérisée en ce que
la machine d'usinage (1) comprend en outre des moyens de calcul pour déterminer des signaux de commande pour l'outil (3), tout en appliquant l'accroissement du paramètre (Δu) aux courbes splines paramétrées, et
les moyens d'approximation établissent une approximation des courbes splines paramétrées, à l'aide de courbes splines rationnelles de manière à obtenir une relation essentiellement linéaire entre le paramètre et la fonction de longueur d'arc, et déterminent l'augmentation du paramètre (Δu) sur la base de la relation linéaire et de la vitesse désirée sur la trajectoire.
